# EUROPÄISCHE PATENTANMELDUNG

(11) **EP 4 459 862 A1**
(43) Veröffentlichungstag der Anmeldung: **06.11.2024**
(21) Anmeldenummer: 23171222.5
(22) Anmeldetag: 03.05.2023
(51) Int. Cl.: H02P 21/00, H02P 21/14, G06Q 50/04

(54) **VERFAHREN ZUR BESTIMMUNG EINES ENERGIEVERBRAUCHS**

(71) Anmelder: Siemens Aktiengesellschaft, 80333 München (DE)
(72) Erfinder: Potoradi, Detlef, 97616 Bad Neustadt/Saale (Mühlbach) (DE)
(74) Vertreter: Siemens Patent Attorneys

(57) **Zusammenfassung**

Die Erfindung betrifft ein Verfahren zur Bestimmung eines Energieverbrauchs eines Antriebs (1), aufweisend Komponenten, wenigstens eine dynamoelektrische Maschine (3), insbesondere einen Servomotor, während eines Arbeitszyklusses (10), wobei auf Basis von Energieverbrauchsdaten der einzelnen Komponenten (2, 3) und auf Basis von einem im Arbeitszyklus (10) erforderlichen Drehmoment (M) während einer Zeiteinheit (t) und/oder einer im Arbeitszyklus (10) erforderlichen Drehzahl (n) während einer Zeiteinheit (t) der Energieverbrauch des Antriebs (1) bestimmt wird.

## Beschreibung

Die Erfindung betrifft Verfahren zur Bestimmung eines Energieverbrauchs.

Die Energieeffizienz von Antrieben mit dynamoelektrischen, insbesondere dynamoelektrischen rotatorischen Maschinen, aber auch Linearantrieben wird immer wichtiger. Wenn ein Kunde ein neues Antriebssystem bestellen möchte, werden bei der Projektierung die zu seinen Anforderungen passenden Komponenten ausgesucht. Jedoch spielt der Energieverbrauch keine Rolle. Auch nachträglich besteht nicht die Möglichkeit, die Energieeffizienz bzw. den Energieverbrauch bezogen auf seinen konkreten Bearbeitungszyklus und die hierfür verwendeten Komponenten abzuschätzen.

Der Erfindung liegt die Aufgabe zugrunde, dies zu verbessern.

Die Lösung der Aufgabe gelingt durch Anspruch 1, d. h. ein Verfahren zur Bestimmung eines Energieverbrauchs eines Antriebs, aufweisend Komponenten, wenigstens eine dynamoelektrische Maschine, insbesondere einen Servomotor, während eines Arbeitszyklusses, wobei auf Basis von Energieverbrauchsdaten der einzelnen Komponenten und auf Basis von einem im Arbeitszyklus erforderlichen Drehmoment während einer Zeiteinheit und/oder einer im Arbeitszyklus erforderlichen Drehzahl während einer Zeiteinheit der Energieverbrauch des Antriebs bestimmt wird.

Vorteilhaft umfasst ein Arbeitszyklus wenigstens eine der folgenden Arbeitsphasen: Beschleunigung, Positionsfahrt, Bearbeitung, Bremsen und/oder Halten.

Auch andere Arbeitsphasen oder eine Wiederholung von Arbeitsphasen ist möglich.

Ein Halten gelingt vorteilhaft bei Drehzahl n = 0.

Vorteilhaft ist zudem eine Ausführung, wonach die Energieverbrauchsdaten wenigstens ein Flussmodell der Maschine und/oder wenigstens ein Verlustkennfeld und/oder wenigstens ein Wirkungsgradkennfeld umfassen.

Die Lösung der Aufgabe gelingt ferner durch ein Computerprogrammprodukt, umfassend Befehle, die bei der Ausführung des Programms durch einen Computer diesen veranlassen, das Verfahren auszuführen.

Die Lösung der Aufgabe gelingt zudem durch ein Computerlesbares Speichermedium, auf dem das Computerprogrammprodukt gespeichert ist.

Das Computerprogrammprodukt ist beispielsweise eine App oder ein anderes Tool und kann während oder auch nach der Projektierung verwendet werden.

So kann zum Beispiel schon während der Projektierung abgeschätzt werden, welche Zusammenstellung von Komponenten für den Kunden nicht nur zum Zeitpunkt des Kaufs am günstigsten ist. Es kann auch ermittelt werden, welche Zusammenstellung von Komponenten mit dem bestimmten Energieverbrauch unter Berücksichtigung von Energiekosten im gewünschten Einsatzzeitraum für den Kunden am günstigsten ist.

Die Lösung der Aufgabe gelingt auch durch einen Antrieb zur Durchführung des Verfahrens.

Im Folgenden wird die Erfindung anhand der in den Figuren dargestellten Beispiele näher beschrieben und erläutert. Es zeigen:
- FIG 1: ein Computerprogrammprodukt,
- FIG 2: mögliche Verfahrensschritte des Computerprogramm-produkts und
- FIG 3: einen Computer,
- FIG 4 - 7: Flussdiagramme,
- FIG 8: ein Wirkungsgradkennfeld.

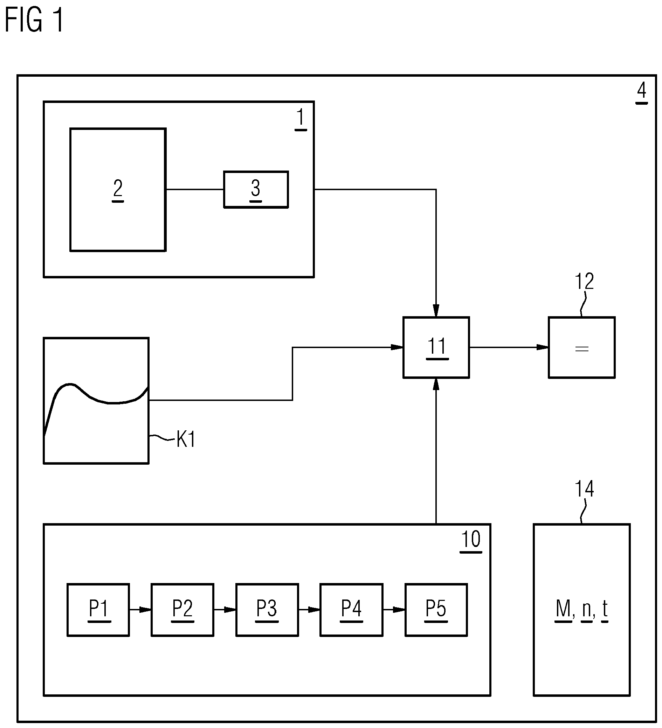

FIG 1 zeigt ein Computerprogrammprodukt 4. Dies ist z. B. eine App.

Durch das Computerprogrammprodukt 4 kann ein Energieverbrauchs 12 eines Antriebs 1, aufweisend eine dynamoelektrische Maschine 3, insbesondere einen Servomotor, sowie einen Umrichter 2 bestimmt werden. Auf Basis von Energieverbrauchsdaten, beispielsweise in Form einer Kennlinie K1 verfügbar, der einzelnen Komponenten, z. B. Umrichter 2 und Maschine3, und auf Basis des im Arbeitszyklus 10 erforderlichen Drehmoments während einer Zeiteinheit und/oder auf Basis der erforderlichen Drehzahl wird der Energieverbrauch 12 des Antriebs bestimmt. Hierfür kann ein Algorithmus 11 hinterlegt sein.

Der Arbeitszyklus 10 kann aus mehreren Phasen bestehen, in der Figur sind beispielhaft die folgenden gezeigt.

Beschleunigen P1, Fahren auf Position P2, Bearbeiten P3, Bremsen P4, Halten P5. Auch andere sind möglich und Wiederholungen denkbar.

Als Eingabedaten sind Angaben zu Drehmoment M, Drehzahl n und die dafür nötige Zeit t im gewünschten Arbeitszyklus 10 des Kunden wichtig.

Informationen bzw. Daten über die Komponenten, insbesondere über die Maschine 3 und den Antrieb 2, aber auch andere Komponenten wie Geber (nicht Dargestellt) sind für die Bestimmung des Energieverbrauchs ebenso wichtig.

Flussmodelle in Matrizenform für den Motor, Kennfelder für die Verluste im Motor oder Wirkungsgradkennfelder eignen sich gut.

Die Flussmodelle beschreiben vorteilhaft das elektromagnetische Verhalten des Motors und die Wirkungsgradkennfelder die im Motor entstehenden Verluste. Für die Berechnung wird vorzugsweise beides benötigt.

Aus den Flussmodellen können z. B. Ströme, Drehmomente und Leistungen berechnet werden. Aus dem Wirkungsgradkennfeld können die Verluste in den unterschiedlichen Betriebspunkten, die beim Zyklus durchfahren werden, berechnet werden. Aus all den Infos wird vorteilhaft in Kombination mit dem Zyklus die Energieeffizienz berechnet.

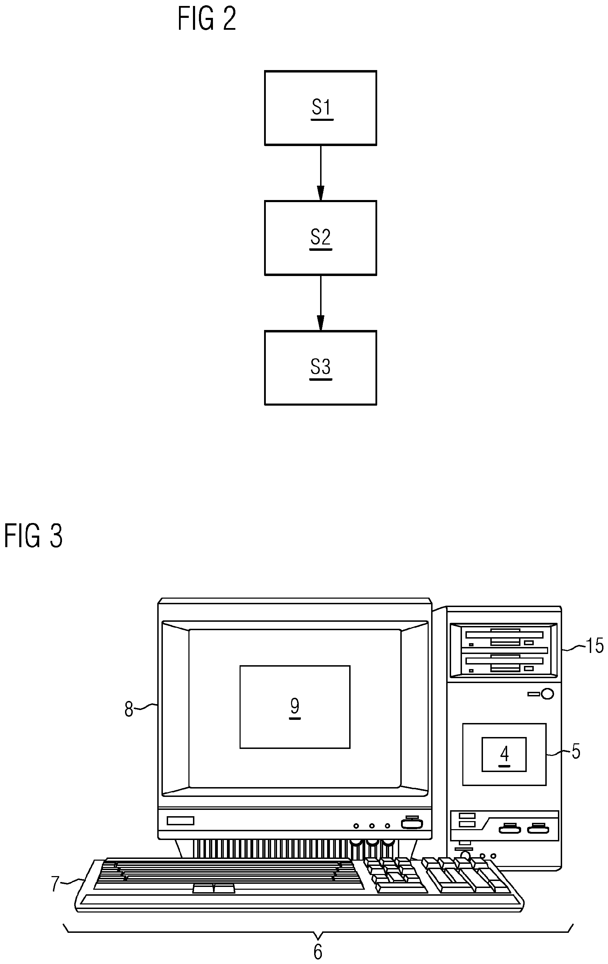

FIG 2 zeigt mögliche Verfahrensschritte.

In einem Verfahrensschritt S1 werden Daten des Kunden eingegeben. Dies sind Angaben zum Arbeitszyklus, nämlich Angaben zu Drehmoment M, Drehzahl n und Zeit t.

In einem Verfahrensschritt S2 erfolgt die Bestimmung des Energieverbrauchs, vorteilhaft durch einen Algorithmus.

In einem Verfahrensschritt S3 wird das Ergebnis des ermittelten Energieverbrauchs für die jeweilige Kombination von Komponenten ausgegeben.

FIG 3 zeigt einen Computer 6, aufweisend eine Eingabeeinheit 7 in Form eines Keyboards, eine Ausgabeeinheit 8 in Form eines Monitors sowie eine Recheneinheit 15. Die Figur zeigt zudem einen Speicher 5, auf welchem das Computerprogrammprodukt 4 abgelegt ist.

Das Computerprogrammprodukt 4 weist vorteilhaft auch eine graphische Bedienoberfläche 9 auf, sodass ein Benutzer beispielsweise Angaben zu Drehmoment oder Drehzahl machen kann, insbesondere mittels des Keyboards.

Mögliche Flussdiagramme bzw. Flussmodelle sind beispielhaft gezeigt.

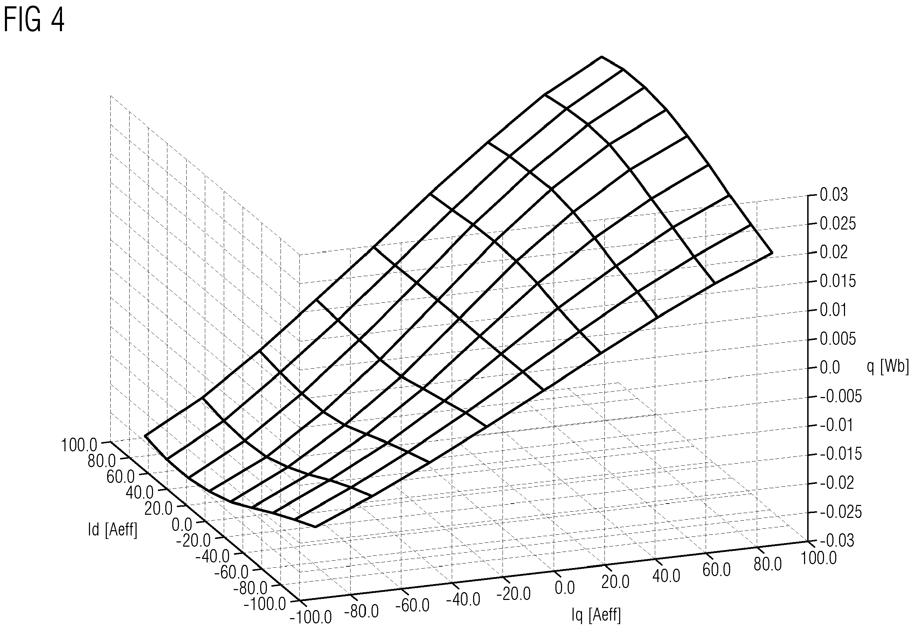

FIG 4 zeigt beispielhaft den Fluss q in der q-Achse abhängig von Iq (momentbildender Strom) und Id (feldbildender Strom) als Diagramm.

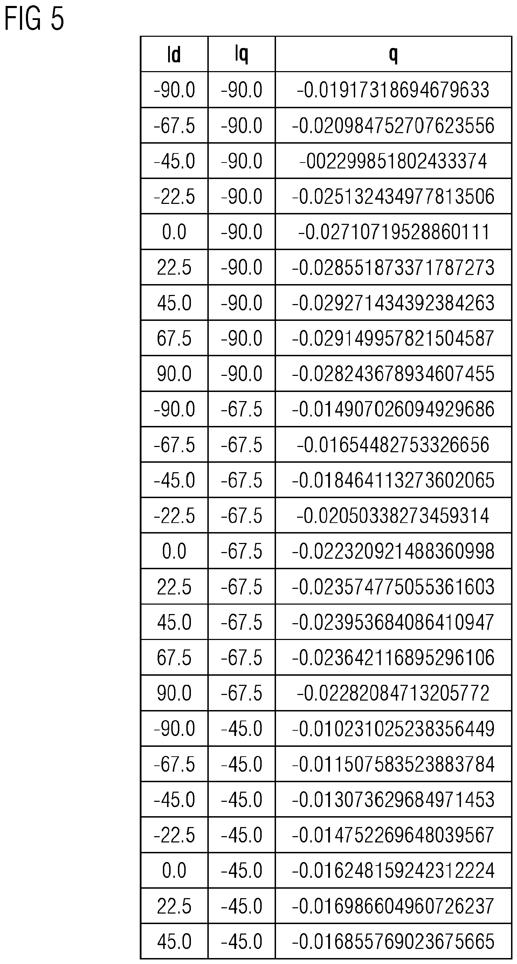

FIG 5 zeigt die zugehörigen Werte zu FIG 4 tabellarisch.

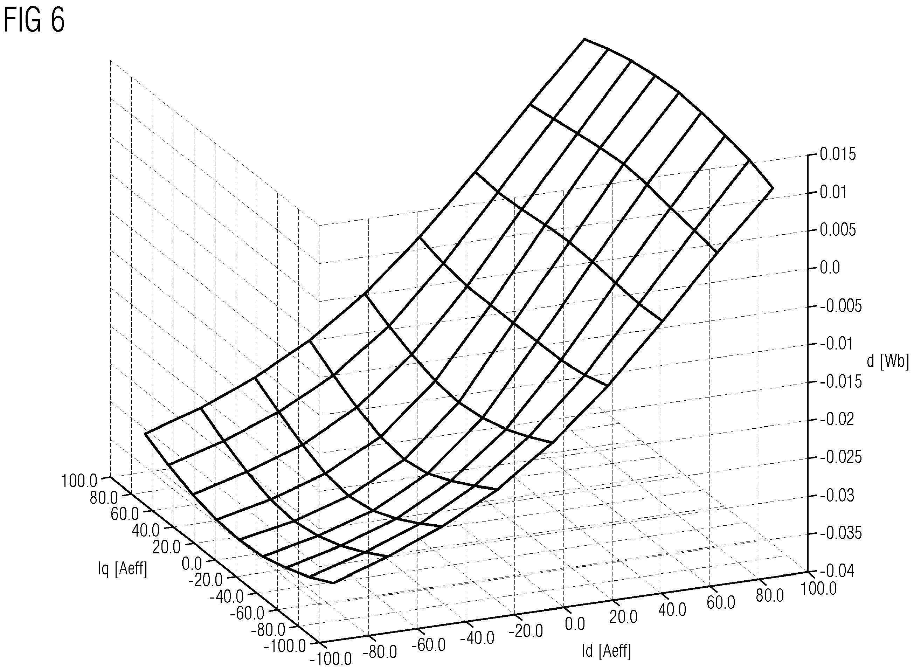

FIG 6 zeigt beispielhaft den Fluss d in der d-Achse abhängig von Iq (momentbildender Strom) und Id (feldbildender Strom) als Diagramm.

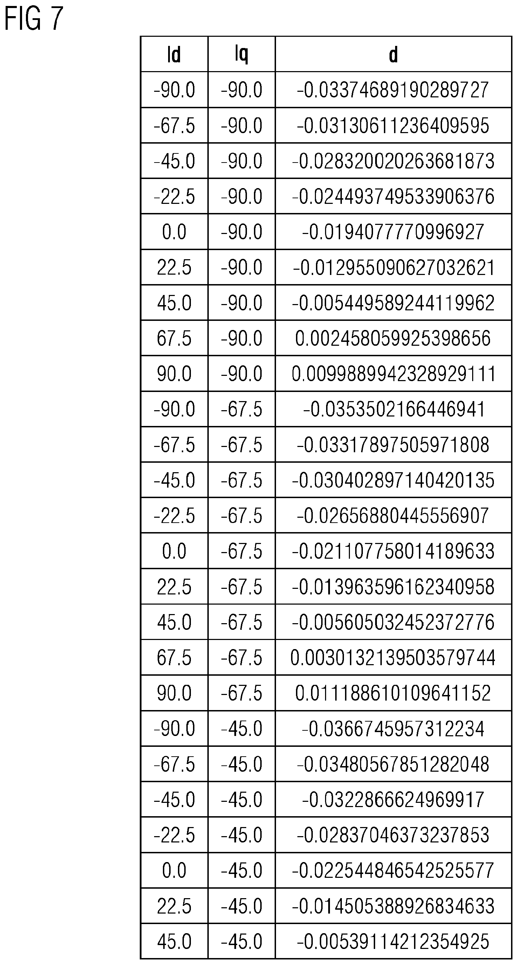

FIG 7 zeigt die zugehörigen Werte zu FIG 5 tabellarisch.

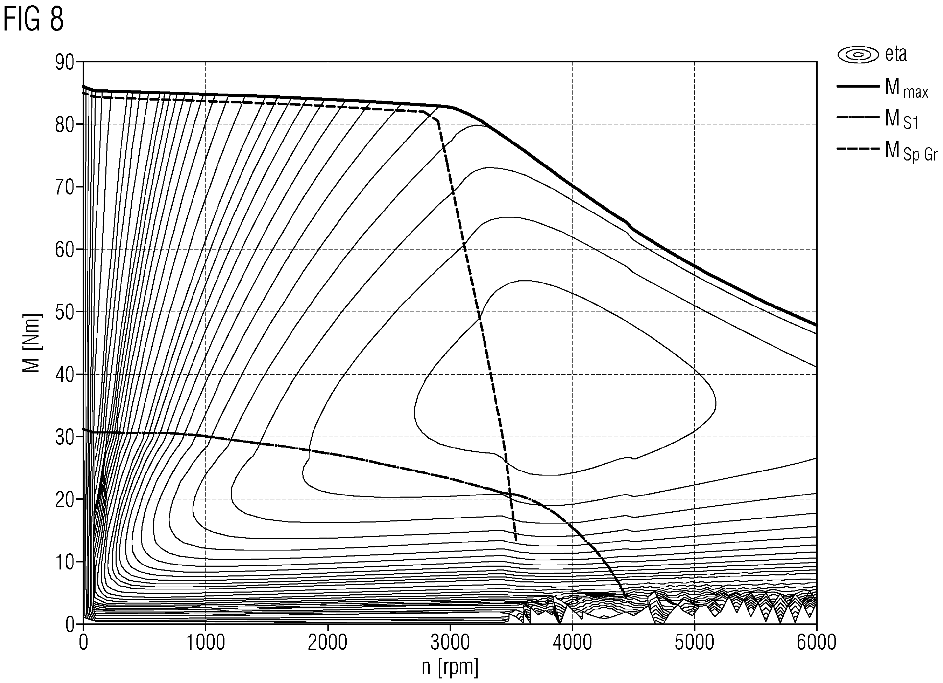

FIG 8 zeigt beispielhaft ein Wirkungsgradkennfeld bzw. Muscheldiagramm. Der Wirkungsgrad ist in der Figur abhängig von Drehzahl n und Drehmoment M.

Zudem sind beispielhafte Kurven des Drehmoments M, nämlich Mmax, MS1 und MSp Gr, gezeigt.

Auf Basis der Energieverbrauchsdaten der einzelnen Komponenten und auf Basis von einem im Arbeitszyklus erforderlichen Drehmoment M wird der Energieverbrauch des Antriebs 1 bestimmt.

## Patentansprüche

1. Verfahren zur Bestimmung eines Energieverbrauchs eines Antriebs (1), aufweisend Komponenten, wenigstens eine dynamoelektrische Maschine (3), insbesondere einen Servomotor, während eines Arbeitszyklusses (10), wobei auf Basis von Energieverbrauchsdaten der einzelnen Komponenten (2, 3) und auf Basis von einem im Arbeitszyklus (10) erforderlichen Drehmoment (M) während einer Zeiteinheit (t) und/oder einer im Arbeitszyklus (10) erforderlichen Drehzahl (n) während einer Zeiteinheit (t) der Energieverbrauch des Antriebs (1) bestimmt wird.

2. Verfahren nach Anspruch 1, wobei ein Arbeitszyklus (10) wenigstens eine der folgenden Arbeitsphasen umfasst:
- Beschleunigung,
- Positionsfahrt,
- Bearbeitung,
- Bremsen,
- Halten.

3. Verfahren nach einem der vorhergehenden Ansprüche, wobei die Energieverbrauchsdaten wenigstens ein Flussmodell der Maschine (3) und/oder wenigstens ein Verlustkennfeld und/oder wenigstens ein Wirkungsgradkennfeld umfassen.

4. Computerprogrammprodukt (4), umfassend Befehle, die bei der Ausführung des Programms durch einen Computer (6) diesen veranlassen, das Verfahren nach einem der Ansprüche 1 bis 3 auszuführen.

5. Computerlesbares Speichermedium (5), auf dem das Computerprogrammprodukt (4) nach Anspruch 4 gespeichert ist.

6. Antrieb (1) zur Durchführung des Verfahrens nach einem der Ansprüche 1 bis 3.
